Europäisches Patentamt

European Patent Office

Office européen des brevets

(11) Veröffentlichungsnummer: **0 310 760**
**A1**

## EUROPÄISCHE PATENTANMELDUNG

(21) Anmeldenummer: 88111741.0

(22) Anmeldetag: 21.07.88

(51) Int. Cl.4: **E02D 17/20 , E02B 3/12 , E04D 11/00**

(30) Priorität: 05.10.87 CH 3873/87

(43) Veröffentlichungstag der Anmeldung:
**12.04.89 Patentblatt 89/15**

(84) Benannte Vertragsstaaten:
**AT BE CH DE ES FR GB GR IT LI LU NL SE**

(71) Anmelder: **SARNA KUNSTSTOFF AG**
**Industriestrasse**
**CH-6060 Sarnen(CH)**

(72) Erfinder: **Eichenberger, Reinhard**
**Sonnhaldenstrasse 57**
**CH-6052 Hergiswil(CH)**

(74) Vertreter: **Kemény, Andreas**
**c/o Kemény AG Patentanwaltbüro Postfach**
**3414**
**CH-6002 Luzern(CH)**

(54) Abdeckung und ihre Verwendung.

(57) Ein Flächengebilde (1) mit vorderseitigen Kammern (2), welche eine Füllung (6) enthalten bildet eine begrünbare bzw. begrünte Auflage (AG), die wasserdicht ausgeführt werden kann. Eine solche Auflage ist errosionsbeständig, kann wasserbremsend wirken, einen Wasserpuffer bilden etc.etc. Die Auflage kann gegebenenfalls auch unbegrünbar oder unbegrünt sein; sie kann wiederaufnehmbar und wiederverwendbar ausgeführt werden. Sie ist umweltfreundlich und doch beständig gegen Umwelteinflüsse auszuführen. Sie kann überal eingesetzt werden, insbesondere im Gelände, auf Bauten etc.

FIG.9

## Abdeckung und ihre Verwendung

Die Erfindung betrifft eine Abdeckung nach dem Oberbegriff des Anspruch 1 und deren Verwendung.

Bislang wurden Deponien und dergleichen durch eine folienartige Bahn unten gegen Sickerwasser abgedichtet und/oder oben gegen Meteorwasser und Oberflächenwasser abgedeckt, wobei es zum Schutze der Bahn und/oder zum Begrünen nötig war, eine recht hohe Aufschüttung vorzunehmen. Diese Aufschüttung ist kostspielig und der Erosion ausgesetzt.

Der Erfindung liegt die Aufgabe zugrunde, eine wirtschaftlich vorteilhafte, gegebenenfalls wasserdichte, Abdeckung zu schaffen, welche ohne hohe Ueberschüttung windfest ist und gegebenenfalls eine extensive Begrünung gestattet. Dabei soll sie samt ihrer Auflage erosionsbeständig sein. Gegebenenfalls soll auch eine einfache Wiederaufnehmbarkeit und gegebenenfalls Wiederverwendbarkeit gegeben sein.

Zur Lösung dieser Aufgabe wird die beispielsweise in den vorstehenden Ansprüchen definierte Abdeckung und deren Verwendung vorgeschlagen.

Die Erfindung eignet sich beispielsweise zum Hangschutz, zur Begrünung von Gelände und Bauten, für Flächenabdichtungen (z.B. über Deponien, im Gelende und bei Bauten) sowie zum Wasserschutz und dergleichen.

Die an der Vorderseite gelegenen Kammern können dabei zweckentsprechend gefüllt sein. So kann beispielsweise für eine wasserdichte Abdeckung eine Mehrzahl von Flächengebilden miteinander durch besondere Verbindungteile oder direkt verbunden werden, worauf man die Kammern beispielsweise mit Kies, Beton und dergleichen füllen kann.

Wenn das Oberflächenwasser möglichst ungehindert abfliessen soll, ist eine Betonfüllung nützlich. Wenn man dagegen eine Dämmung des Abflussen wünscht, scheint eine Kiesfüllung günstiger. Man kann entweder ohne die genannten Füllungsarten oder mit ihnen kombiniert auch begrünbare Füllungen verwenden, was den zusätzlichen Vorteil der Vegetation mit sich bringen kann.

Die einzelnen Kammern können voneinander strikt durch Wandungen getrennt sein, es können aber auch entsprechende Durchlässe in den Wandungen vorgesehen sein, beispielsweise um gebremst Wasser durchzulassen.

Man kann die Abdeckung sowohl horizontal als auch auf geneigten Unterlagen verwenden, wobei man gegebenenfalls Befestigungen an und/oder in der Unterlage vorsehen kann, welche in die rückseitig hohlen Wände des Flächengebildes eingreifen und ein Verschieben oder Abgleiten wirksam verhindern können, ohne, dass man Oeffnungen im Flächengebilde vorsehen müsste.

Man kann die Kammern mit einer durchlässigen Schicht bedecken. Diese Schicht kann Winderosion und Wassererosion der Füllung noch wirksamer verhindern, so dass eine Begrünung und/oder Wasserbremsung auch in sehr ungünstigen Fällen möglich ist.

Man kann eine derartige Schicht mit dem Flächengebilde so verbinden, dass eine Art Sandwich mit hoher Biegesteifigkeit entsteht. Man kann dann gegenbenenfalls auch an der Unterseite des Flächengebildes eine versteifende Schicht anbringen.

Wenn man in die rückseitig hohlen Wände der Kammern entsprechende Einlagen setzt, die z.B. Stangen, Seile etc. sein können, kann man das Flächengebilde partiell oder ganz heben, z.B. um zu einem darunterliegenden Material Zugang zu erhalten, wie dies bei Deponien oder Erdlagern (Mieten) erforderlich sein kann.

Nachstehend seien einige Möglichkeiten angegeben: Oberflächenabdichtungen mit integrierter Schutzschicht, mit oder ohne Begrünung, z.B. bei Deponien, Böschungen, Kunstbauten (wie Tunnelportalen) und dergl., einschliesslich Begrünungen für Steil und Flachdächer, Galerien etc.etc.

Die Erfindung wird nachstehend anhand der rein schematischen Zeichnung beispielsweise erörtert.

Es zeigen:

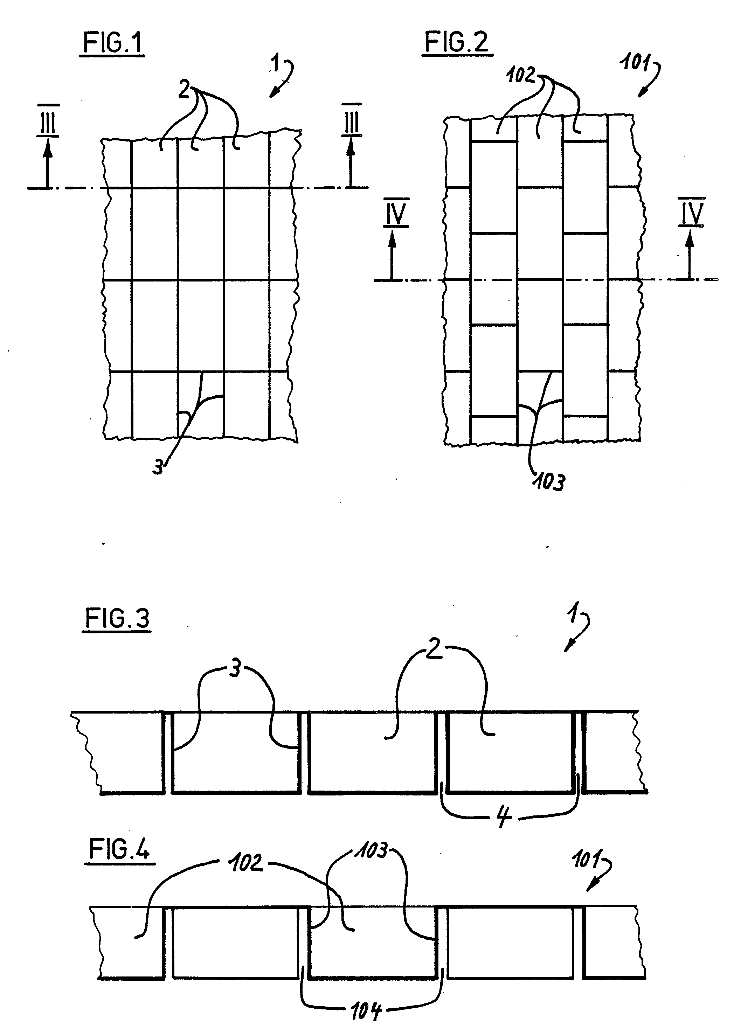

Fig. 1 eine Draufsicht auf ein Flächengebilde 1 mit versatzlos aneinandergereihten Kammern 2,

Fig. 2 eine ähnliche Draufsicht auf ein Flächengebilde 101 mit versetzt angeordneten Kammern 102,

Fig. 3 einen vergrösserten Schnitt nach Linie III-III in Fig. 1, in welchem man nebst den Kammern 2 auch deren Wandungen 3 mit rückseitigen Hohlräumen 4 am Flächengebilde 1 deutlich erkennt,

Fig. 4 einen ähnlichen Schnitt nach Linie IV-IV in Fig. 2, wo man die Kammern 102, deren Wandungen 103 mit rückseitigen Hohlräume 104 des Flächengebildes 101 erkennt,

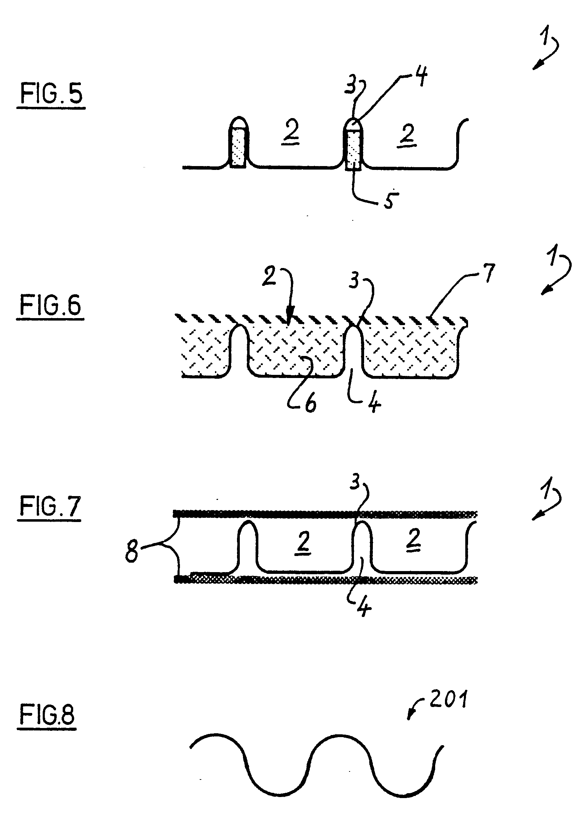

Fig. 5 einen der Fig. 3 ähnlichen, aber kleineren Schnitt, bei welchem in den rückseitigen Hohlräumen 4 Versteifungseinlagen 5 gezeichnet sind,

Fig. 6 einen wiederum ähnliche Schnitt, bei welchem eine Kammerfüllung 6 und eine durchlässige Auflage 7 angedeutet sind,

Fig. 7 einen weiteren ähnlichen Schnitt, bei welchem oben und unten sandwichartig angebrachte Auflagen 8 zur Versteifung des Flächengebildes 1 angedeutet sind,

Fig. 8 einen Schnitt ohne Hintergrund durch ein wellenförmiges Flächengebilde 201, wobei festzuhalten ist, dass es nur um die Andeutung der anders möglichen Formgebung geht, nicht aber darum, diese Form als besonders günstig erscheinen zu lassen,

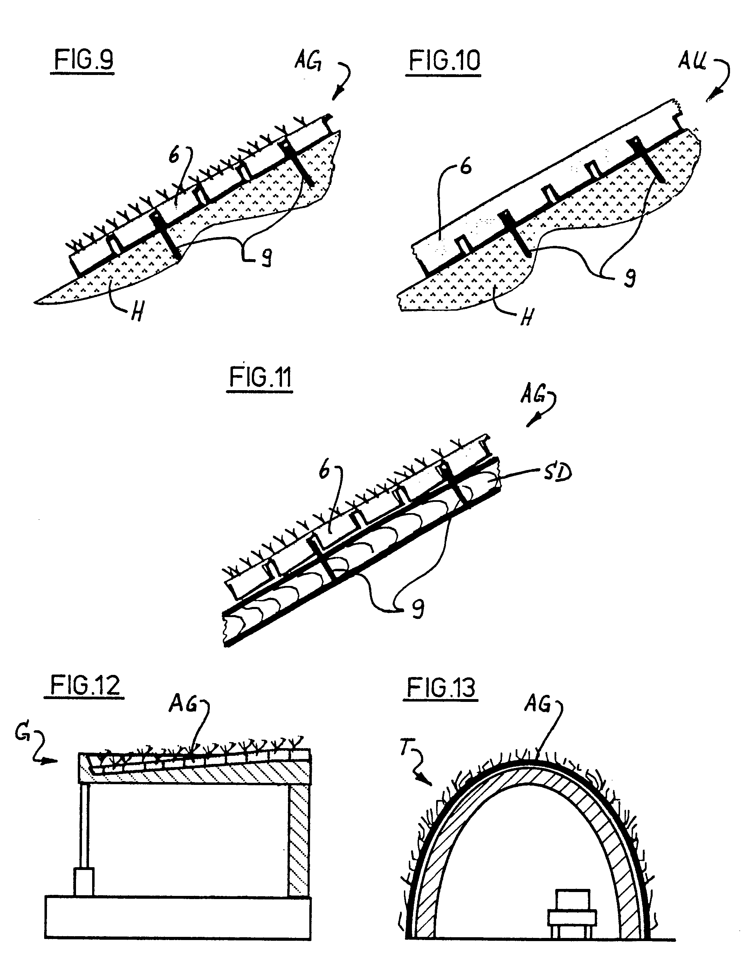

Fig. 9 einen Schnitt durch einen Hang H mit begrünter Abdeckung AG, bei welcher in den rückseitigen Hohlräumen 4 stellenweise Verankerungselemente 9 vorgesehen sind,

Fig. 10 einen ähnlichen Schnitt, wie in Fig. 9 jedoch mit unbegrünter Abdeckung AU, wiederum mit Verankerungselementen 9,

Fig. 11 einen Schnitt durch ein Schrägdach SD, dessen begrünte Abdeckung AG ebenfalls durch Verankerungselemente 9 gehalten ist,

Fig. 12 einen Schnitt durch eine Galerie G mit begrünter Abdeckung AG, die durch das Flächengebilde (nicht ersichtlich) gegen Erosion geschützt ist,
und

Fig. 13 einen Schnitt durch einen Tagbautunnel T mit begrünter Abdeckung AG.

In den Zeichnungen wurden folgende Ueberweisungszeichen verwendet:

1 Flächengebilde mit versatzlosen Kammern 2
101 Flächengebilde mit versetzten Kammern 102
201 wellenförmiges Flächengebilde
2 Kammern an Vorderseite von 1
102 Kammern an Vorderseite von 101
3 Wandungen von 2
103 Wandungen von 102
4 Hohlräume an Rückseite von 3
104 Hohräume an Rückseite von 103
5 Versteifungseinlagen in 4
6 Kammerfüllung in 2
7 Auflage, wasserdurchlässig, auf 1
8 Auflagen, versteifende, über und unter 1
9 Verankerungselement
AG Abdeckung, begrünt
AU Abdeckung, unbegrünt
G Galerie
H Hang
SD Schrägdach
T Tagbautunnel

Neben den gezeichneten Beispielen lassen sich noch viele andere Ausführungsformen der Erfindung verwirklichen. So lassen sich die horizontal gezeichneten Abdeckungen auch schräg und in gewissen Fällen mit durchlässigen Deckeln sogar Vertikal, um nicht zu sagen auf dem Kopf stehend verwenden. Selbstverständlich lassen sich die schräg gezeichneten Ausführungsformen auch horizontal etc. anordnen.

Als Material des Flächengebildes eignet sich vorallem tiefziehbares Folienmaterial, welches eine gewisse Steifigkeit haben sollte und umweltverträglich sein kann.

Die Abdeckung ist wirtschaftlich vorteilhaft realisierbar und, zumindest wenn sie die verstärkende Einlagen enthält wiederaufnehmbar, ja sogar wiederverwendbar.

Wenn das Flächengebilde aus mehreren Bahnen besteht, können diese überlappt oder durch Verbindungselemente verbunden werden, wobei auch ein Verschweissen möglich ist.

## Ansprüche

1. Abdeckung mit einem Flächengebilde, welches eine im Gebrauch vorwiegend erdwärts gerichtete Rückseite sowie eine im Gebrauch wenigstens vorwiegend nach oben gerichtete Vorderseite aufweist, DADURCH GEKENNZEICHNET, dass das dreidimensional ausgeformte Flächengebilde (1; 101; 201) an seiner Vorderseite eine Mehrzahl von Kammern (2; 102) aufweist, welche wenigstens teilweise ein Füllmaterial (6) enthalten, wobei solche Kammern (2; 102) gegebenenfalls Abmessungen im Bereich von einigen Centimetern bis einigen Dezimetern aufweisen.

2. Abdeckung nach Anspruch 1, dadurch gekennzeichnet, dass Füllmaterial (6) ein spezifisches Gewicht in der Grössenordnung von weniger als eins bis zu einem Betrag, der grösser ist als das spezifische Gewicht des Materials des Flächengebildes (1; 101; 201,) aufweist.

3. Abdeckung nach Anspruch 1 oder 2, dadurch gekennzeichnet, dass die Kammern (2; 102) voneinander wenigstens teilweise durch Wandungen (3) getrennt sind, welche Wandungen (3) an der Rückseite, gegebenenfalls durchgehende, Hohlräume (4) aufweisen.

4. Abdeckung nach einem der Ansprüche 1 bis 3, dadurch gekennzeichnet, dass sie auf der Rückseite Versteifungen (5) und/oder Träger aufweist, welche gegebenenfalls in den rückseitigen Hohlräumen (4) der Wandungen (3) der vorderseitigen Kammern (2; 102) gelegen sind und gegebenenfalls entnehmbar angeordnet sind.

5. Abdeckung nach einem der Ansprüche 1 bis 4, dadurch gekennzeichnet, dass die Kammerfüllung (6) begrünbar bzw. begrünt ist.

6. Abdeckung nach einem der Ansprüche 1 bis 5, dadurch gekennzeichnet, dass sie auf der Vorderseite eine durchlässige Auflage (8) aufweist.

7. Abdeckung nach einem der Ansprüche 1 bis 6, dadurch gekennzeichnet, dass sie am Untergrund durch an ihrer Rückseite angreifende Verankerungselemente (9), insbesondere gegen Abgleiten, befestigt ist.

8. Abdeckung nach einem der Ansprüche 1 bis 7, dadurch gekennzeichnet, dass das Flächengebilde (1; 101; 201) aus einer tiefgezogenen und/oder anders ausgeformten , Vorzugsweise wenigstens teilweise thermoplastischen Folie besteht.

9. Abdeckung nach einem der Ansprüche 1 bis 8, dadurch gekennzeichnet, dass es gegen pflanzliche und tierische Angriffe, resistent ist, insbesondere wurzelfest und nagetierbeständig ausgestaltet ist.

10. Verwendung einer Abdeckung nach einem der Ansprüche 1 bis 9 zur Herstellung von Flüssigkeitsdichten Sperrschichten, beispielsweise auf Deponien, Geländeabschnitten, Kunstbauten und dergleichen.

FIG.1

FIG.2

FIG.3

FIG.4

FIG.5

FIG.6

FIG.7

FIG.8

FIG.9

FIG.10

FIG.11

FIG.12

FIG.13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 189 156 (N.V. DE BATAAFSCHE PETROLEUM MAATSCHAPPIJ) * Seite 2, Ansprüche; Figuren 2-4,6 * | 1,2 | E 02 D 17/20 E 02 B 3/12 E 04 D 11/00 |
| Y | --- | 3 | |
| Y | EP-A-0 071 213 (G.H. TESCH) * Seiten 14,15; Figur 2 * --- | 3 | |
| X | PATENT ABSTRACTS OF JAPAN, Band 7, Nr. 153 (M-226)[1298], 5. Juli 1983; & JP-A-58 62 221 (AASUNIKUSU K.K.) 13-04-1983 * Zusammenfassung * | 1 | |
| A | Idem --- | 5 | |
| A | DE-A-3 045 390 (W. ZINK) * Seiten 10,11; Figuren 1,4 * --- | 1-6 | |
| A | US-A-3 561 177 (I.T. AGRO & L.L. CHIUSOLO) --- | | |
| A | DE-A-2 818 793 (E.G. GÖSSLING) ----- | | |

**RECHERCHIERTE SACHGEBIETE (Int. Cl.4)**

E 02 B
E 02 D
E 01 C
E 01 F
E 04 D
A 01 G

Der vorliegende Recherchenbericht wurde für alle Patentansprüche erstellt

| Recherchenort | Abschlußdatum der Recherche | Prüfer |
|---|---|---|
| DEN HAAG | 06-12-1988 | BIRD,C.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument